# EUROPEAN PATENT SPECIFICATION

(11) **EP 2 790 908 B1**
(45) Date of publication and mention of the grant of the patent: **26.04.2017**
(21) Application number: 12815820.1
(22) Date of filing: 10.12.2012
(51) Int. Cl.: B29D 30/06, B29C 35/02

(54) **METHOD AND APPARATUS FOR VULCANIZING A TYRE**
VERFAHREN UND VORRICHTUNG ZUR VULKANISIERUNG EINES REIFENS
PROCÉDÉ ET APPAREIL DE VULCANISATION D'UN PNEU

(30) Priority: 15.12.2011 IT PD20110390; 19.12.2011 US 201161577411 P
(43) Date of publication of application: 22.10.2014
(73) Proprietor: Pirelli Tyre S.p.A., 20126 Milano (IT)
(72) Inventor: PIANTANIDA, Pier Giuseppe, I-20126 Milano (IT); BOSCAINO, Ivan Gildo, I-20126 Milano (IT); MANCINI, Gianni, I-20126 Milano (IT)
(74) Representative: Susanetto, Carlo
(86) International application number: PCT/IB2012/057144
(87) International publication number: WO 2013/088328

(56) References cited:
- EP-A1- 0 468 343
- EP-A2- 0 888 872
- EP-A2- 1 023 987
- EP-A2- 1 177 883
- JP-A- H06 238 669
- US-A- 1 420 371
- US-A- 3 002 228
- US-A- 3 489 833
- US-A- 3 645 660
- US-A- 3 884 739

## Description

The present invention relates to a method and to an apparatus for vulcanizing a tyre, in particular a top-of-the-range tyre, to be understood as meaning a high-performance or competition tyre. The tyre is vulcanized by means of a vulcanization mould during a first stage of the vulcanization process and in an apparatus outside the mould during a second stage of the vulcanization process.

A tyre generally comprises a carcass structure, with a toroidal ring-like shape, including one or more carcass plies. Each carcass ply has its ends integrally associated with at least one annular anchoring structure usually comprising a bead core, forming the reinforcement for the beads, i.e. the radially inner ends of said tyre, which have the function of allowing assembly of the tyre with a corresponding mounting rim. On the crown of said carcass structure there is arranged a band of elastomeric material, called a tread band, in which a relief design for contact with the ground is formed after completion of the vulcanization and moulding steps. A reinforcing structure, usually known as a belt structure, is situated between the carcass structure and the tread band.

Respective sidewalls made of elastomeric material are also applied onto the side surfaces of the carcass structure, each extending from one of the side edges of the tread band as far as the region of the respective annular anchoring structure.

The toroidal structure of the tyre therefore defines a radially outer surface, which substantially coincides with the outer surface of the tread band, and a radially inner surface, which generally is not visible during use of the tyre.

During a tyre production cycle it is envisaged that, following a preparation process during which the various components of the tyre are made and/or assembled, a moulding and vulcanization process is performed with the aim of defining the structure of the tyre according to a desired geometry, normally having a particular tread pattern.

For this purpose, the green tyre, i.e. tyre which has not yet been moulded and vulcanized, is enclosed in a moulding cavity which is defined inside a vulcanization mould and shaped in accordance with the geometrical configuration of the outer surfaces of the tyre to be obtained.

Once vulcanization has been completed, the mould is opened so as to allow removal of the tyre. The vulcanization time depends on the size of the tyre and the thickness of the tread as well as the characteristics which are to be imparted to the tyre, as described in detail below.

During the vulcanization process, which is nothing other than a cross-linking process, radical changes in the physical, mechanical and chemical properties occur in the elastomeric material forming the green tyre. For example, elastic properties arise with the disappearance of the plastic properties. The vulcanized elastomeric material has a greater breakage strength, greater elongation and greater tear strength and resistance to solvents.

The expression "degree of cross-linking" is understood as meaning a pure number ranging between 0 and 1 which identifies the degree of completion of the cross-linking process of the elastomeric material, where 0 corresponds to the value of the raw elastomeric material and 1 represents the value relating to the completely vulcanized elastomeric material. This number is preferably indicated also in percentage form (0% - 100%).

"Semi-vulcanized tyre" is understood below as meaning a tyre in which the degree of cross-linking of an elastomeric material forming at least one tyre portion is between about 0.5 and about 0.95 (namely between about 50% and about 95%).

It is considered that a tyre is vulcanized or that the vulcanization process has been completed when the elastomeric material forming at least one portion of the tyre has reached a degree of cross-linking of at least 99%. The percentage variations in temperature indicated will be understood as being expressed in relation to the reference values indicated in degrees centigrade (°C) and not degrees absolute (K). For example a temperature variation of between 60% and 120% relative to a reference temperature of 150°C shall be understood as covering the range between 90°C (150°C - 40%) and 180°C (150°C + 20%).

As regards the pressure, as is known it may be classified in two ways: either as an absolute pressure equal to the pressure measured taking the vacuum as a reference value; or as a relative pressure equal to the pressure taking another pressure value (typically atmospheric pressure) as a reference value.

The term "pressure", or pressure variations, refers to the relative pressure, even if not directly indicated, and the atmospheric pressure is taken as the reference value.

European patent application EP 1657049 relates to a post-vulcanization inflator for expanding the vulcanized tyre during cooling. The post-inflator comprises a mechanism for retaining the vulcanized tyre and a rotating mechanism for rotating the vulcanized tyre at a high speed by means of the retention mechanism such that a forced convection becomes more dominant than a natural convection in an air flow about the vulcanized tyre. European patent applications EP 468343 and EP 888872 also relates to post cure inflation apparatuses, wherein a fully vulcanized tyre is inflated and cooled.

US 3884739 discloses an apparatus for recapping a plurality of worn tyres with a precured tread rubber comprising a sealed chamber for housing the worn tyres to be recapped in which heated air is supplied so as to bond the precured tread rubber to the worn tyre. JP H06 238669 discloses a method of vulcanising a tyre wherein a semi-vulcanized tyre is removed from a mould and then heated in a post-cure inflator to complete vulcanisation. The US patent US 6322342 describes a green tyre which is partially vulcanized during a primary vulcanization operation by a tyre vulcanizer. The initially vulcanized tyre is then fully vulcanized during a secondary vulcanization operation by an inflator. This allows the vulcanization cycle to be reduced by means of simultaneous vulcanization performed by the vulcanizer and the inflator in parallel so as to increase the productivity.

The Applicant has established that each type of compound, namely each type of elastomeric material forming a green tyre, possesses characteristics which may be varied depending on the time and the temperature of the vulcanization process. It has been noted that, for certain types of compound, in particular for those forming a high-performance tyre, it is advantageous for qualitative purposes to have a relatively long vulcanization cycle, i.e. more than 30 minutes, while operating at middle-range temperatures, for example in the range of 140°C to 170°C. This relatively long duration of the vulcanization process, however, has the disadvantage that it results in the vulcanization mould being kept occupied with the same tyre for this duration, with a consequent increase in the production costs. In fact, the time spent in the vulcanization mould is a decisive factor for the overall cost of the tyre, the vulcanizer being a relatively costly and complex apparatus.

The Applicant has therefore perceived the need to reduce the time for which the tyre to be vulcanized remains inside the vulcanization mould, while however still achieving the same technical results which can be achieved with a relatively slow vulcanization operation performed inside the vulcanization mould for the whole time period required as described above. The Applicant has examined the vulcanization method divided into two stages as proposed in US 6322342 and has observed that, although this method effectively reduces the time spent by a single green tyre inside the vulcanizer since the tyre is removed from the vulcanization mould before vulcanization has been completed, the type of treatment performed afterwards for completion of vulcanization, carried out adiabatically, is unable to achieve the same technical results, in particular in terms of performance, as those which can be obtained by means of a single prolonged vulcanization operation performed in the vulcanization mould. The Applicant has therefore perceived the importance of developing an apparatus and a method for reducing the time spent by the tyre inside the vulcanizer and performing a subsequent treatment on the tyre in order to compete vulcanization, while maintaining the same final characteristics of the tyre which are obtained with a prolonged vulcanization operation performed inside the vulcanization mould.

The Applicant has realised that, unlike the vulcanization processes consisting of two stages where the transition of the tyre from a first vulcanization stage inside a vulcanization mould to a second vulcanization stage inside a post-inflator occurs adiabatically, in order to obtain results comparable with those which can be obtained by a vulcanization process performed entirely inside a vulcanization mould or press, after the tyre has been removed from the mould before completion of vulcanization, it must be inserted inside a further device where it is supplied with a quantity of heat per positive unit of time such as to bring the semi-vulcanized tyre rapidly again to a temperature close to that which it had inside the vulcanization mould.

The Applicant has found, finally, that, by removing a semi-vulcanized tyre from a vulcanization mould and bringing it, in a different closed environment, to a temperature close to that possessed at the time of extraction from the vulcanization mould in a predetermined predefined period of time, it is possible to restore effectively the vulcanization process so that vulcanization is completed outside of the mould without altering the design performance characteristics of the moulded and vulcanized tyre, thus freeing the mould station for a following green tyre in a shorter time than the normal vulcanization time if vulcanization were to be performed entirely inside the said mould.

In greater detail, according to a first aspect, the invention relates to a method of vulcanizing a green tyre according to claim 1.

The Applicant considers that, according to the aforementioned method, a vulcanized tyre with technical characteristics comparable to those of a tyre vulcanized in a "slow" vulcanization process where the tyre performs the entire vulcanization cycle inside the vulcanization mould is obtained. In this way not only are vulcanized tyres conforming to design specifications obtained, but also the efficiency of the entire vulcanization plant or of each mould is decidedly improved while reducing the time spent by each tyre inside the mould itself.

The action of completing vulcanization is performed by introducing the semi-vulcanized tyre into a chamber defining a closed free space inside which said tyre is housed and a first heated fluid is admitted into the chamber so as to heat the semi-vulcanized tyre in order to complete vulcanization thereof.

According to another aspect, the present invention relates to an apparatus for completing the vulcanization of a semi-vulcanized tyre according to claim 8.

In a further aspect, the present invention relates to a vulcanization plant, according to claim 13.

The present invention, in at least one of the aforementioned aspects, may have at least one of the preferred characteristics indicated below. Preferably, the flow of said heat is directed from said radially outer surface towards said radially inner surface.

In other words, the Applicant has established that an optimal vulcanization is obtained by supplying heat in the region of the radially outer surface of the semi-vulcanized tyre and removing heat from (in other words cooling) the radially inner surface thereof. This is due to the fact that, at the outlet of the vulcanization mould, a greater cross-linking action occurs in the region of the radially inner surface than in the region of the radially outer surface of the semi-vulcanized tyre and therefore supplying heat in this varied manner reduces the risks of over-cross-linking.

Preferably, during the action of completing the vulcanization of said semi-vulcanized tyre, the temperature of said at least one portion of said semi-vulcanized tyre reaches a value of between about 130°C and about 180°C. More preferably, said temperature reaches a value of between about 140°C and about 165°C.

The Applicant has established that in this temperature range, which, as mentioned above, must be achieved in the shortest possible time period, optimum vulcanization is achieved and the risks of over-vulcanization are reduced to a minimum.

Preferably, said at least one portion of semi-vulcanized tyre comprises at least one portion of said radially outer surface.

Preferably, said at least one portion of semi-vulcanized tyre comprises at least one portion of said first annular anchoring structure and/or of said second annular anchoring structure.

According to a preferred embodiment, in said chamber the semi-vulcanized tyre is locked in the region of said opposed first and second annular anchoring structures, so as to define two separate spaces: an inner space partially delimited by said radially inner surface of said semi-vulcanized tyre, and an outer space partially delimited by said radially outer surface of said semi-vulcanized tyre and by an inner wall of said chamber.

Preferably said first fluid is admitted to said outer space so that the temperature inside said outer space in the region of a portion of said radially outer surface of said semi-vulcanized tyre reaches a value at least 10°C higher than the temperature value of said portion of said radially outer surface of said semi-vulcanized tyre upon its removal from the vulcanization mould.

The Applicant has established that an optimum vulcanization is obtained not only when the temperature which the tyre had inside the mould is reached in the shortest possible period of time, but also when this temperature is exceeded, and in particular exceeded by at least 10°C in the region of the radially outer surface of the tyre.

Preferably, a second fluid is admitted at ambient temperature into said inner space.

The Applicant has established that an optimum vulcanization is obtained by admitting said second relatively cold fluid inside the tyre, namely in the region of its radially inner surface.

According to a further preferred embodiment, a second fluid is admitted into said inner space and is brought to a relative pressure of between about 0.1 bar and about 3 bar.

More preferably, said relative pressure is kept substantially constant over time at a predetermined value until said vulcanization is completed.

The second fluid admitted inside the tyre and introduced, for example, by means of a pump is placed under pressure in order to avoid deformation of the tyre itself due to a not yet complete cross-linking of the elastomeric material forming the said tyre.

The Applicant has seen how, by operating at a relative pressure chosen in a range [0.1 - 3 bar], it is possible to process tyres of different sizes and with different compounds.

It is, however, preferable to monitor continuously, for example by means of an electronic pressure control system including for example a pressure sensor, the pressure inside the tyre, while maintaining the selected value in a substantially constant manner, since the heat would otherwise tend to cause an increase in the pressure inside the closed space of the tyre. This is performed in order to avoid any explosion of tyres due to an excessive increase in pressure.

In the case mentioned above, the expression "substantially constant" indicates the fact that there may be a permitted variation about an initial value of the second fluid inside the tyre (owing to the variations in temperature in a constant-volume environment) of up to 50%.

Preferably, the action of removing said semi-vulcanized tyre from said vulcanization mould is performed when the degree of cross-linking of the elastomeric material forming said at least one portion is between about 85% and about 95%.

In one example of embodiment, the average temperature of said first fluid in said outer space is kept at a predetermined value substantially constantly over time until said vulcanization is completed. In this case the term "substantially constant" indicates variations of up to 5% of the predetermined value.

After a transient in which the chamber in which the tyre is introduced must be brought to the required temperature in order to continue vulcanization of the semi-vulcanized tyre introduced, the Applicant has established how maintaining a substantially constant temperature produces the optimum effects in the vulcanized tyre. In particular, the average temperature is kept constant, being calculated for example using at least two temperature sensors at the axially opposite ends of the chamber and determining the average of the values obtained.

Preferably, a quantity of heat per unit of time is supplied to said first annular anchoring structure, which is greater than the quantity of heat per unit of time that is supplied to the opposed, second annular anchoring structure of said semi-vulcanized tyre.

The Applicant has also established how the temperature of the tyre while it is being supplied heat inside the apparatus after removal thereof from the mould is not uniform but has variations, also of the order of tens of degrees. This difference occurs mainly in the region of the first and second annular anchoring structure of the semi-vulcanized tyre. This is due in particular to the formation of condensation in the region of the bottom annular anchoring structure which adversely affects the transmission of the heat in the zone concerned. Therefore, in order to make the temperature uniform, inside the chamber a quantity of heat per unit of time greater than the quantity of heat per unit of time supplied to the second annular anchoring structure of the semi-vulcanized tyre is preferably supplied to said first annular anchoring structure, arranged underneath.

Furthermore or as an alternative, the action of removing said semi-vulcanized tyre from said vulcanization mould and introducing said semi-vulcanized tyre into said chamber is performed within a period of time of between about 30 seconds and about 3 minutes.

Preferably, at least one portion of a peripheral wall of said chamber is heated so as to bring it to a temperature above the ambient temperature. More preferably, said temperature is above 170°C.

In other words, the chamber where the semi-vulcanized tyre is housed is a heated chamber such that, when the vulcanization completion action is started, it is already at a temperature such that the quantity of heat which must be supplied in order to resume vulcanization of the semi-vulcanized tyre is used mostly to heat the tyre and not the chamber itself.

Preferably, said chamber comprises at least one of the following characteristics:
a base;
a case which is movable axially from a first operative position in which it is spaced from said base so as to permit the introduction of said semi-vulcanized tyre into a second operative position in which it bears with hermetic sealing on said base;
a first flange which is integral with said base and is abutted by a first annular anchoring structure of said semi-vulcanized tyre;
a second, axially movable flange which is adapted to abut a second annular anchoring structure axially opposite the first one of said semi-vulcanized tyre in said second operative position.

The tyre is therefore locked inside the chamber by the two flanges which abut in the region of the beads of the semi-vulcanized tyre in a substantially hermetic manner. Displacement of the flanges and the chambers allows the introduction of the semi-vulcanized tyre and its subsequent removal at the end of the vulcanization process.

Preferably said heater element includes at least one fan.

Preferably said heater element includes the distributor comprising a surface including a plurality of holes so as to cause said first fluid to emerge from said plurality of holes.

According to a preferred example, said distributor is arranged in the region of said base.

Preferably, said surface including a plurality of holes is shaped as a cylindrical shell.

Therefore the first heated fluid enters into the chamber from a position in the region of the base and is distributed therein with a movement from the top downwards, namely from the bottom bead to the top bead.

More preferably, said distributor is arranged coaxially with said semi-vulcanized tyre, when housed in said chamber, and is arranged substantially symmetrically about said first and/or second flange.

Preferably, said holes are formed in a portion of said surface substantially facing said first and/or second flange.

Preferably, said distributor includes an annular channel which the first heated fluid enters tangentially.

The distributor therefore generates a flow of heated fluid which is very homogeneous owing to its particular geometry: said first fluid enters the annular channel tangentially, and in particular tangentially with respect to the surface comprising the holes from which the same first fluid emerges. The latter therefore emerges substantially without pressure from the said holes, having exhausted the thrust inside the ring defined by the annular channel. In this way it may spread in an extremely homogeneous manner inside the chamber containing the semi-vulcanized tyre which must complete vulcanization.

The plurality of holes distributed along preferably the entire cylindrical shell allows correct distribution of the air along the entire outer surface of the tyre.

Preferably, said first fluid is air.

Preferably a second heater element is envisaged, being disposed in the region of said first flange for the heating thereof.

Preferably a pump and a distribution duct are envisaged for the admission of a second fluid at a pressure of between about 0.1 bar and about 3 bar between said two flanges in said second operative position.

Preferably a pressure control circuit is envisaged, said circuit including at least one pressure sensor, suitable for keeping the pressure between said two flanges in said second operative position substantially constant at a predetermined value until said vulcanization is completed.

Preferably a temperature control circuit is envisaged, said circuit including at least one temperature sensor, suitable for keeping the average temperature substantially constant around a predetermined value in the space defined by said case until completion of said vulcanization.

Preferably, said case comprises a peripheral wall and a third heater element for heating said peripheral wall.

More preferably, said case includes a cavity including a tube bundle through which a fluid heated by said third heater element flows.

As mentioned above, it is preferred to heat the case such as to release heat via the distributor of the first fluid for the most part to the semi-vulcanized tyre and not to the case itself.

Preferably, a first actuator for the axial movement of said second flange and a second actuator for the axial movement of said case are envisaged, said first actuator and second actuator moving said flange and said case, respectively, independently of one another.

Preferably said device is adapted to remove said semi-vulcanized tyre from said vulcanization mould and move it to said apparatus within a period of time of between about 30 seconds and about 3 minutes.

Preferably, the plant according to the invention includes two apparatuses for each vulcanization mould.

In this way the use of the vulcanization mould is optimized, there being always an apparatus for completing the vulcanization which is free whenever a semi-vulcanized tyre is ready to be removed at the outlet of the mould.

The characteristic features and advantages of the invention will emerge more clearly from the detailed description of two preferred examples of embodiment thereof, provided solely by way of a non-limiting example, with reference to the accompanying drawings in which:
- Figure 1 is a simplified exemplary diagram of a vulcanization plant provided in accordance with the invention;
- Figure 2 is a simplified radially sectioned and partial view of a green tyre suitable for being vulcanized according to the method of the present invention;
- Figure 3 is a side elevation and cross-sectional view of a vulcanization mould forming part of the plant according to Figure 1;
- Figure 4 is a side elevation and cross-sectional view of an apparatus for completing vulcanization of a tyre, designed in accordance with the invention in a first operative position;
- Figure 5 is a side elevation and cross-sectional view of the apparatus according to Figure 4 in a second operative position;
- Figure 6 is a view, similar to that of Figure 5, in which a flow of fluid inside the apparatus is shown;
- Figure 7 is a top plan view of a component of the apparatus according to Figures 4 to 6 removed from the apparatus itself;
- Figure 8 shows a cross-sectional view of a case forming part of the apparatus according to Figures 4 to 6;
- Figure 9 is a perspective view of the component according to Figure 7;
- Figure 10 is a cross-sectional view of a semi-vulcanized tyre;
- Figure 11 is a side elevation and cross-sectional view of a portion of a further example of embodiment of the apparatus for completing vulcanization of a tyre, provided in accordance with the invention.

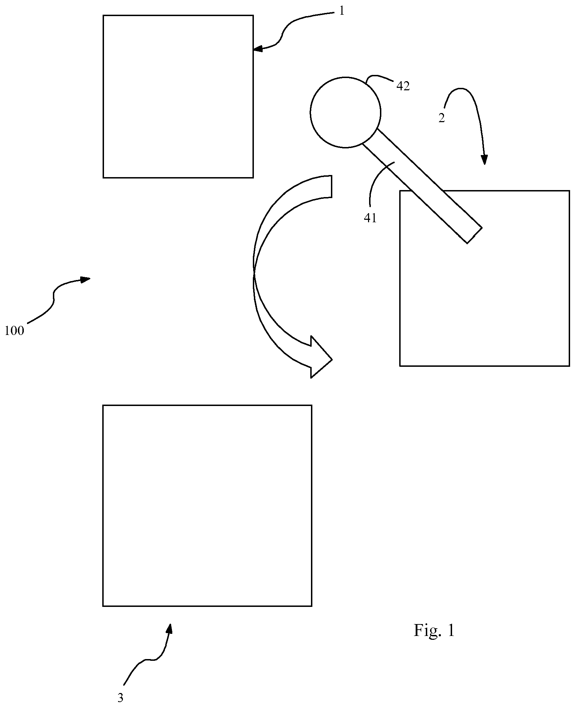

With initial reference to Figure 1, 100 denotes overall a vulcanization plant provided in accordance with the present invention for vulcanizing a green tyre 50.

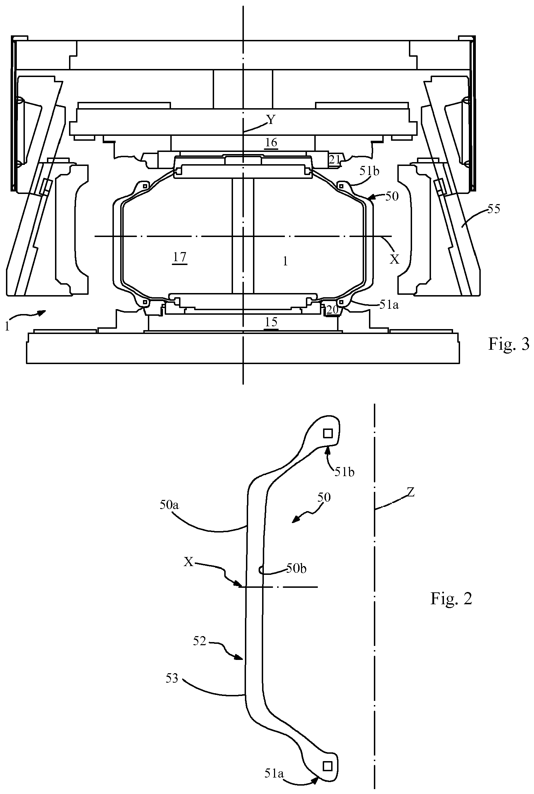

The plant 100 comprises a vulcanization press or mould 1, the characteristics and constructional details of which are considered to be known in the sector and will only be briefly described below. The mould 1 may be of any type known in the reference sector and is suitable for receiving green tyres 50 (see Figure 2) assembled during a prior processing step, i.e. during a suitable preparation step; for example the green tyres 50 may be prepared using semifinished articles deposited on a suitable forming support.

In detail, the green tyre 50 suitable for being vulcanized - shown in a schematic cross-sectional view in Figure 2 - defines an axis Z which substantially coincides with its axis of rotation and a plane X, indicated by means of a line in Figure 2, which is the equatorial plane of the tyre, namely the centre plane perpendicular to the axis of rotation Z. The green tyre 50 comprises a carcass structure 52, including at least one carcass ply (not visible in the figures) operationally associated with a pair of annular anchoring structures 51a, 51b, a tread band 53 in a position radially on the outside of said carcass structure and a belt structure (also not visible) arranged between the carcass structure and the tread band 53. Planes containing the axis of rotation of the tyre are indicated as radial planes (for example Figure 2 is a radial cross-section through the green tyre 50, namely the plane in Figure 2 is a radial plane: it contains in fact the axis Z). The tyre will be described below with reference to its equatorial plane X and its radial planes; therefore the references to "axially inner/outer" or "radially inner/outer" are to be understood with reference to the equatorial plane X and the axis of rotation Z, respectively. Therefore, the green tyre has, defined thereon, a radially inner surface 50b, which for example may coincide with a component called "liner", and a radially outer surface 50a, typically the tread band.

Preferably, the green tyre 50 has a fitting diameter greater than or equal to 16 inches.

As schematically shown in Figure 2, the annular anchoring structures 51a and 51b constitute the two opposite, radially inner ends of the green tyre 50.

With reference now to Figure 3, the vulcanization mould 1 generally has a bottom side plate 20 and a top side plate 21 which are respectively engaged with a base 15 and a portion 16 for closing a container 17, and a telescopic and substantially cylindrical central body 30 with an axis Y inside which the green tyre 50 is inserted. The central body 30 is moved when performing its telescopic axial extension/contraction movements for example by means of hydraulic cylinders (not shown).

The mould 1 also includes a ring of circumferential segments 55 which define a moulding cavity which has a geometrical axis which coincides with the axis Y of the central body 30 and which preferably also coincides, as shown in the illustration of Figure 2, with the axis of rotation Z of the green tyre 50 when the latter is inserted inside the mould 1.

The circumferential segments 55 generally have forming reliefs (not visible in Figure 1) and are predisposed so as to act on a radially outer surface of the tread band 53 of the green tyre 50, in order to create therein a series of incisions and grooves which are suitably arranged in a desired "tread pattern".

The base 15 and the closing portion 16, together with the respective bottom side plate 20 and top side plate 21, are movable relative to each other between an open condition where they are spaced from each other so as to allow the introduction of the green tyre 50 to be vulcanized inside the mould 1, and a closed position where they are arranged closer together so as to enclose the green tyre 50 inside the moulding cavity (namely the container 17).

The mould also generally comprises a heating element (not shown) such as a plurality of ducts (also not shown) for heating the ring of circumferential segments 55 and/or introducing a heated fluid into an inflatable chamber (not visible) suitable for pressing and heating a radially inner surface of the green tyre 50 against the circumferential segments 55, the bottom side plate 20 and the top side plate 21, so as to mould and vulcanize it (partially according to the invention). The mould therefore vulcanizes and defines the geometric shape of the tyre.

As mentioned above, however, the vulcanization mould 1 may be of any type, for example may be without the inflatable chamber mentioned (so-called "bladderless" chamber).

According to the invention, the tyre is removed from the mould 1 before complete cross-linking or vulcanization of the elastomeric material forming the tyre, in particular preferably it is removed when the degree of cross-linking of the elastomeric material forming at least one portion of the tyre is greater than 50% and less than 95%, more preferably when it is between about 85% and about 95%. Therefore the tyre leaving the mould 1 in accordance with the definition employed previously is referred to below as "semi-vulcanized" tyre 60.

The plant 100 also comprises a device 2 for removing and displacing the semi-vulcanized tyre 60 leaving the vulcanization mould 1, as well as an apparatus 3 for completing vulcanization of the semi-vulcanized tyre 60 output from the mould 1 and displaced by the device 2.

The device 2 schematically shown in Figure 1 comprises for example a loader 42, namely a gripper, movable by means of a motor-driven arm 41 for gripping the semi-vulcanized tyre 60 and conveying it inside the apparatus 3, as will be described more fully below. The movement of the arm 41 is schematically indicated by the arrow shown in Figure 1. Alternatively, the device 2 may include, together with the gripper 42, a conveyor belt for conveying the semi-vulcanized tyre 60 to the apparatus 3. Since, from the moment of its removal from the vulcanization mould 1, the semi-vulcanized tyre 60 starts to lose heat, having been transferred from the vulcanization mould 1 which has a temperature generally of between about 150°C and about 170°C to the external environment, in order to prevent its temperature from dropping excessively, the device 2 is adapted to convey the semi-vulcanized tyre 60 from the mould 1 to the apparatus 3 preferably in a time period of between about 30 seconds and about 3 minutes.

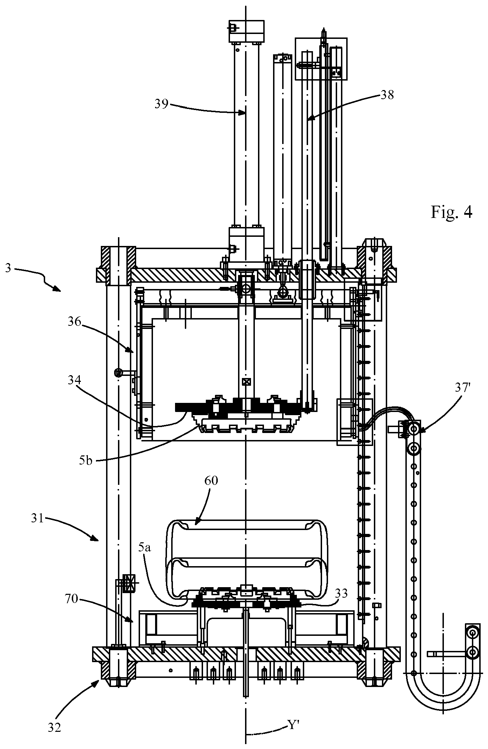

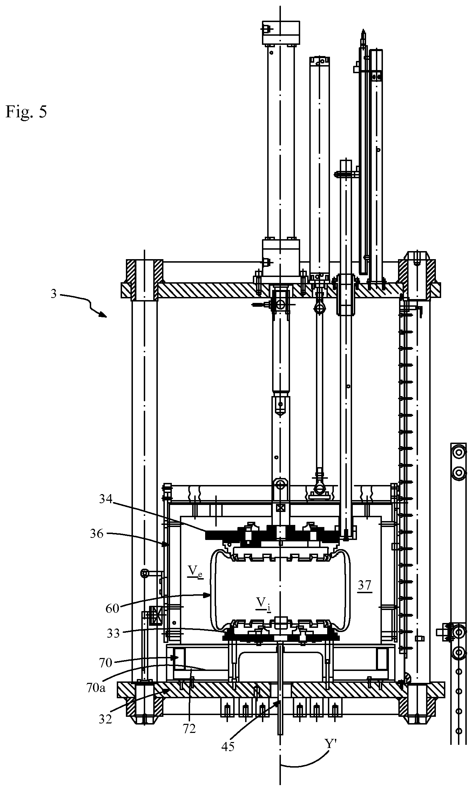

With reference now to Figure 4, the apparatus 3 for completing vulcanization of the semi-vulcanized tyre 60 produced in accordance with the invention is shown in a first open operative position suitable for receiving the semi-vulcanized tyre 60 conveyed by the device 2. In detail, the apparatus 3, which has a geometric axis Y' which preferably coincides as shown in the diagram of Figures 4 and 5 with the axis of rotation of the semi-vulcanized tyre 60 (coinciding with the axis Z defined above), comprises a support structure 31 including a base 32.

The base 32 has, fixed thereon, a first flange 33, also called bottom flange, against which the semi-vulcanized tyre 60 abuts when introduced into the apparatus 3, as described in detail below.

The apparatus 3 also comprises a closing case 36, which is axially movable with respect to the base 32 and operatively associated with the support structure 31, being able to be displaced from an open position in the first operative position of the apparatus 3, where it is spaced from the base 32 so as to allow the introduction of the semi-vulcanized tyre 60, into a closed position for performing closing - preferably in a hermetic manner - of the semi-vulcanized tyre 60 inside a chamber 37 having a space delimited by the case 36 and by the base 32. Closing of the case 36 corresponds to the second operative position of the apparatus 3 shown in Figure 5.

The axial movement of the case 36 is performed for example by means of a hydraulic actuator 38 including a hydraulic piston which slides along an axis substantially parallel to the geometric axis Y'.

The bottom flange 33 has preferably an annular form and defines a first locating surface 5a for an axially outer surface portion of the annular anchoring structure 51a of the semi-vulcanized tyre 60, located in a bottom position.

The apparatus 3 includes a second flange 34, referred to below as top flange, also preferably with an annular form, substantially identical to that of the bottom flange 33, and therefore defining a second locating surface 5b abutted by a second axially outer surface of the anchoring structure 51b arranged in a top position when the semi-vulcanized tyre 60 is closed inside the apparatus 3.

Preferably, the top and bottom flanges 33, 34 are preferably formed in such a way as to allow the introduction into the apparatus 3 of semi-vulcanized tyres with different fitting diameters, there being provided a plurality of possible locating surfaces for annular anchoring structures positioned on different diameters: these flanges are also known as "multi-fit flanges".

The top flange 34 is also axially movable away from and towards the base 32. It is displaceable from a position which allows insertion of the semi-vulcanized tyre 60 inside the apparatus 3 into a position where it abuts against the annular anchoring surface 51b. Resting of the top flange 34 against the corresponding annular anchoring structure 51b occurs in the second operative position of the apparatus 3 which is shown in Figure 5. In said second operative position shown in Figure 5 the following are defined: an inner space Vᵢ delimited by the radially inner surface 50b of the semi-vulcanized tyre 60 and by the two flanges 33 and 34 and an outer space Vₑ delimited by the radially outer surface 50a of the semi-vulcanized tyre 60 and by an inner wall 36a of the case 36.

The displacement of the top flange 34 from the first operative position into the second operative position is independent of the axial movement of the case 36: the axial displacement of the flange 34 depends - among other things - on the dimension of the semi-vulcanized tyre 60 and therefore preferably the flange 34 is moved by an additional hydraulic actuator 39 - relative to the movement of the case 36 - for displacements along an axis parallel to the axis Y'.

Preferably, during the axial displacement, the top flange 34 does not exert any pressure on the semi-vulcanized tyre 60, in particular not causing deformation thereof.

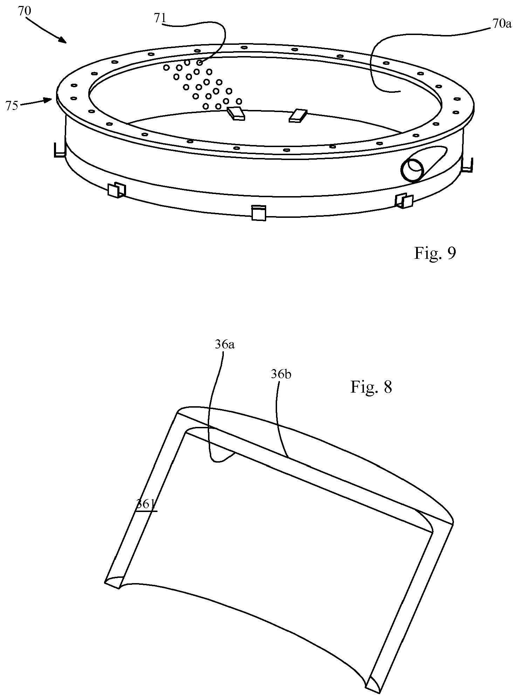

The case 36 is shown in detail in Figure 8. It includes one or more cavities spaced by walls 36a, 36b (in the figure only one cavity 361 is shown, but further intermediate walls may be provided) and/or one or more insulating layers (not shown) which line the outer wall. A heated fluid may be introduced inside the cavity 361, as described in greater detail below.

A heating element, not visible in the figures, for heating a fluid such as steam is operationally associated with said case 36. Said heater may comprise a heated fluid supply circuit including, as shown in Figures 4 and 5, a single duct 37' for the delivery and discharge functions. Alternatively, said supply circuit may comprise a delivery circuit and a discharge duct for supplying and discharging said fluid, respectively.

For example, the duct 37' is connected to a tube bundle (not visible) present in the cavity 361 of the case 36 so that the walls 36a, 36b of the case, and in particular the inner wall 36a of the chamber 37 defined therein, reaches a temperature much higher than the ambient temperature. More preferably, the fluid admitted into the duct 37' is heated to a temperature such that the inner wall 36a of the case 36 is brought to a temperature higher than 170°C.

The apparatus 3 also includes a further supply device, also not shown, for admitting into the space Vᵢ defined inside the tyre between the two flanges 33 and 34 in the second operative position of the apparatus 3 a second fluid under pressure, for example air. The supply device for example includes a pump (not shown). This second fluid under pressure is for example admitted by means of a duct 45 passing through the bottom flange 33. The second fluid in question is preferably admitted inside the space Vᵢ at a temperature more or less the same as the ambient temperature. Preferably, said second fluid is admitted at a relative pressure of between about 0.1 bar and about 3 bar.

According to the invention, the apparatus 3 also comprises an additional heater, denoted overall by 70, comprising a distributor 75 of a first fluid preferably arranged in the region of the bottom flange 33 and even more preferably fixed to the base 32 in a manner substantially concentric with the flange 33.

The distributor 75 is designed to distribute a first heated fluid inside the chamber 37, in particular inside the outer space Vₑ. It includes a surface 70a provided with a plurality of holes, denoted overall by 71, from which said first fluid emerges at a high temperature, as will be described in greater detail below.

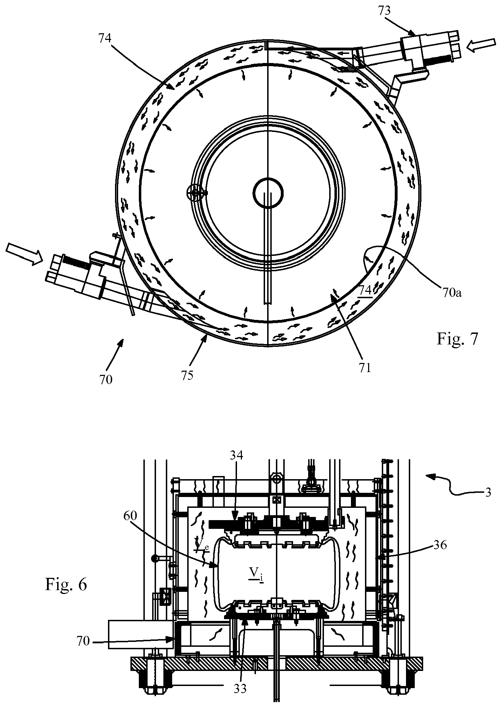

With reference to Figures 7 and 9, where the heater 70 is shown in detail, the heater 70 comprises at least one actual electric heater 73 which is passed through by said first fluid, drawn in from the outside for example via a fan or blower (not shown in the figures). The path of the first fluid supplied from outside is schematically indicated by means of two arrows in Figure 7, each of which represents the direction of flow of the fluid drawn by a respective blower and directed towards the two electric heaters 73. Each electric heater 73 by means of special resistances (not shown) raises the temperature of the first fluid which passes through it, for example increases the temperature of the air which is drawn in from the outside environment. The first fluid therefore thus heated is admitted into the distributor 75.

Preferably, the distributor 75 includes an inner channel 74, called below "annular channel" since it is substantially formed, in longitudinal section, as a circular ring and is delimited radially by two cylindrical shells, including the wall 70a with the holes 71. The wall 70a is preferably arranged around the bottom flange 33, encircling it. More preferably, the wall 70a is directed towards the flange 33, namely faces it. Moreover the flow of the heated fluid entering inside the annular channel 74 propelled by the two blowers, with the aid, where necessary, of respective additional fans (also not shown), is directed tangentially with respect to the channel 74, in particular tangentially with respect to the wall 70a, as shown in Figure 7. The two blowers are preferably arranged so that the first heated fluid, for example heated air, enters tangentially the channel 74 in two positions spaced at about 180° from each other. This geometric form allows a substantially uniform distribution of the first fluid which emerges from the distributor 75 via the holes 71 in a manner substantially perpendicular to the surface 70a in the outer space Vₑ of the chamber 37. Preferably, at the input into the channel 74, the temperature of the first fluid in the distributor 75 exceeds 200°C.

Although in Figure 9 only a portion of the surface 70a comprises holes 71, it is to be understood that said holes are preferably distributed in a substantially uniform manner over the entire surface 70a or alternatively solely in a number of portions (areas) thereof. However, preferably these areas are arranged on the wall 70a in an angularly symmetrical manner. The flow of the fluid emerging from the distributor 75 is distributed from the bottom upwards in the outer space Vₑ of the chamber 37 around the semi-vulcanized tyre 60, in particular acts on its radially outer surface, as can be seen in Figure 6 where it is schematically indicated by means of wavy arrows.

Preferably, since owing to heating of the semi-vulcanized tyre 60, the pressure of the second fluid inside the space Vᵢ tends to vary, the apparatus 3 also has a pressure control device (not shown) comprising a pressure control sensor (also not shown) for monitoring the pressure inside the semi-vulcanized tyre 60 in order to prevent accidental breakage or deformation thereof. This control device may for example include a PID (Proportional-Integral-Derivative) control system.

The apparatus 3 also includes a temperature control device (not shown in the figures) including a temperature sensor, more preferably at least two temperature sensors. The sensors are preferably located in a top zone and bottom zone of the chamber 37, i.e. in particular substantially in the region of the top flange and bottom flange 33,34.

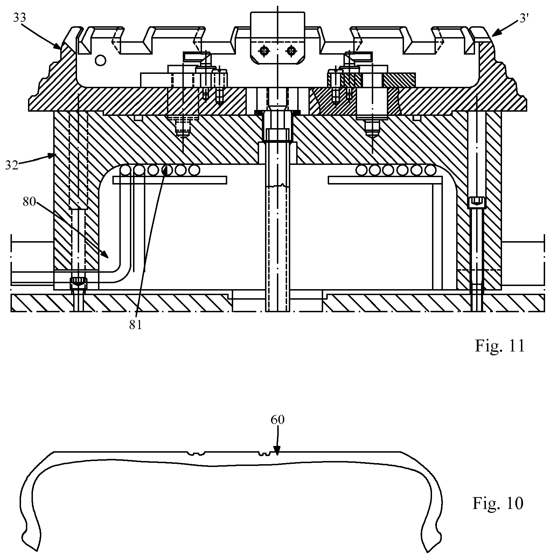

According to a different preferred example of the invention, shown partially in Figure 11, the apparatus 3' according to the invention includes an additional heater 80. The further characteristics of the apparatus 3', apart from the presence of the additional heater 80, are similar to those already described with reference to the apparatus 3 and the same reference numbers are used.

In Figure 11, the portion of the apparatus 3' corresponding to the base 32 and to the bottom flange 33 is shown. The additional heater 80 is positioned so as to supply an additional quantity of heat, namely a quantity of heat in addition to that supplied by the heater 70, in the region of the flange 33, in greater detail underneath it, so as to heat even more the flange 33. The heater 80 includes for example a tube bundle 81, preferably coil shaped, which extends in spiral fashion underneath the flange 33 and inside which a high-temperature fluid flows. Preferably, the aforementioned temperature ranges between about 170°C and about 180°C.

In accordance with the method of the invention, the vulcanization of a green tyre 50 is performed in two stages, i.e. a first stage performed inside the vulcanization mould 1 and a second stage performed in the apparatus 3, 3' according to the invention. The green tyre 50 is therefore placed in the mould 1 and vulcanized here during a first stage without completing the vulcanization process, namely the mould 1 is opened and the semi-vulcanized tyre 60 is removed from the mould 1 when the elastomeric material from which at least a portion thereof is made reaches a degree of cross-linking greater than or equal to about 50%, more preferably between about 85% and about 95%. The semi-vulcanized tyre 60 is removed by the device 2 and then brought to the apparatus 3, 3' when the latter is in the first operative position, i.e. in the first operative configuration where it is open, with the base 36 axially spaced from the base 32 and with the top flange 34 situated at a distance from the bottom flange 33.

Preferably, the case 36 has already been heated by the heater element associated with it such that the inner wall 36a is heated to a temperature preferably higher than 170°C.

The semi-vulcanized tyre 60 is then placed by the device 2 on the base 32 so that the axis of rotation of the semi-vulcanized tyre 60 (coinciding with the aforementioned axis Z) and axis Y' of the apparatus 3, 3' coincide. The bottom annular anchoring structure 51a of the semi-vulcanized tyre 60, in this configuration shown in Figure 4, abuts against the bottom flange 32. The apparatus 3, 3' is then brought into the second operating position, i.e. the case 36 is displaced so that it abuts against the base 32, preferably in a sealed manner. Moreover, the top flange 34 is brought into the region of the top annular anchoring structure 51b and abuts against it: two spaces, i.e. inner space Vᵢ and outer space Vₑ, are therefore defined in relation to the semi-vulcanized tyre 60. The travel performed by the flange 34 is preset depending on the axial dimension of the semi-vulcanized tyre 60. The configuration obtained is visible in Figure 5.

Since the semi-vulcanized tyre 60 is not completely cross-linked, in order to avoid deformation, a second fluid under pressure is preferably admitted inside the inner space Vᵢ via the duct 45. The internal pressure inside the inner volume Vᵢ is also preferably constantly measured: once a desired reference pressure value has been fixed, i.e. a value greater than the ambient pressure, it is kept substantially constant, for example by means of feedback. The current pressure value measured by the pressure sensor and the desired pressure value are compared at regular time intervals and, depending on the outcome of the comparison, said second fluid is discharged by actuating for example a valve. It should be noted that the pressure of said second fluid can only increase with respect to the reference value during the vulcanization completion process; in fact, in a constant volume (Vᵢ) with an increase in the temperature, according to the laws governing gases, the pressure increases. Advantageously, said second fluid present in the inner space removes heat from the tyre, in particular from its radially inner surface, being for example admitted at the ambient temperature, thus avoiding excessive cross-linking of the radially inner walls, for example of the liner.

Inside the apparatus 3, 3', brought therefore into the second operative position, the second stage of vulcanization of the semi-vulcanized tyre commences so that complete vulcanization thereof is performed, namely in such a way that the degree of cross-linking of the elastomeric material of at least one portion thereof is greater than or equal to about 99%. In order to achieve this, the internal atmosphere of the case 36 is regulated in such a way that the temperature of the tyre returns as rapidly as possible close to the temperature it had inside the vulcanization mould 1, for example by supplying heat to the semi-vulcanized tyre 60. According to the invention, from the time the semi-vulcanized tyre is removed by the device 2 from the mould 1, at least one portion of the tyre is brought to a temperature having a value of between about 75% and about 120% of the temperature of the at least one portion of the semi-vulcanized tyre at the moment of its removal from the vulcanization mould, within a period of time of between about 2 minutes and about 7 minutes.

The heat is supplied by the heater element 70 by means of admission of said first heated fluid into the outer space Vₑ: preferably said first fluid, for example air, is such that at least one tyre portion is brought to a temperature ranging between about 130°C and about 180°C, more preferably between about 140°C and about 165°C within the period of time defined above. More preferably, the temperature of the tyre portion considered is brought to a value which is at least 10°C higher than the value which the same portion has when leaving the vulcanization mould 1.

The first fluid flows out from the holes 71 in the distributor 75: the form of the said holes, the geometrical configuration of the distributor and the way in which the air is admitted into the annular channel 74 allow a substantially uniform distribution of the first fluid around the tyre, in particular around the outer radial surface thereof (see Figure 6). Therefore this portion to which reference is made and which is brought quickly to a temperature close to or higher than that which the tyre portion had in the vulcanization mould 1 is preferably a portion of the radially outer surface (50a) of the tyre, or more preferably of the tread band, portions which, as can be seen in Figure 6, are in direct contact with the heated fluid flow emerging from the distributor 75. Alternatively or in addition, this portion may be a portion of one of the two annular anchoring structures 51a, 51b or of both of them. In greater detail, with reference to Figure 6, the fluid flow emerging from the distributor 75, propelled by the blowers, is distributed inside the chamber 37 in a substantially homogeneous manner, from the bottom upwards. The fact that the case 36 is already hot owing to the introduction of steam inside it guarantees an improved efficiency of the apparatus 3,3': the heat which is admitted by means of the heater 70 is in fact released mainly to the semi-vulcanized tyre 60 and not to the base 36, the latter being at a temperature which is already high.

Preferably, the radially inner surface 50b of the tyre is cooled, owing to the second fluid introduced at a temperature lower than that of the tyre, for example ambient temperature, inside the space Vᵢ, as already mentioned above, generating a flow of heat from the radially outer surface 50a to the radially inner surface 50b of the tyre.

The temperature of the chamber 37, namely the temperature of the outer space Vₑ, is kept substantially constant for the entire duration of the second tyre vulcanization stage. Preferably, completion of the aforementioned second tyre vulcanization stage occurs in a time of between about 15 minutes and about 25 minutes. The temperature signal supplied by the temperature sensors is processed by the temperature control device: preferably the temperature values which can be derived from the two or more sensors are averaged and the average temperature value is kept constant inside the space Vₑ. For this purpose, a threshold value is set: in the case where the average temperature falls below this value, a control signal is sent to the heater 70 in order to activate the fan or fans so that additional first heated fluid is admitted into the chamber 37. Therefore operation of the heater element 70 is not continuous, but is activated as required, when the average temperature falls below the threshold mentioned. Generally, the fans of the heater 70 operate actively for about 25% of the total time of the second vulcanization stage.

Obviously, the temperature is kept substantially constant, except for the initial gradient where it increases rapidly in order to supply heat as quickly as possible to the semi-vulcanized tyre 60 as soon as it is inserted inside the case 36.

According to an optional action of the method according to the invention, an additional quantity of heat is supplied to the bottom flange 33 so as to heat it more quickly than solely with the heater 70. The quantity of additional heat is supplied by the heater 80.

During the time when the semi-vulcanized tyre 60 is undergoing the second vulcanization stage in the apparatus 3 or 3', a new green tyre 50 is inserted inside the vulcanization mould 1 and the first vulcanization stage is performed inside it. Therefore, the first and second vulcanization stages are performed simultaneously on different tyres. Preferably, two apparatuses 3 or 3' are associated with each vulcanization mould 1 so that, whenever a mould has completed the first vulcanization stage, an apparatus 3 or 3' is free to receive the semi-vulcanized tyre 60 leaving the mould 1 and thus optimize the amount of time for which the mould 1 is occupied with green tyres 50.

Once the time required for completion of vulcanization of the semi-vulcanized tyre 60 has lapsed, i.e. at the end of the second vulcanization stage in the apparatus 3 or 3', the flow of hot fluid inside the chamber 37 is stopped, for example by switching off the heater 70, and the case 36 is opened, with the apparatus 3, 3' returning into the first operative position. Preferably, if present, the heater 80 associated with the bottom flange 33 and the heater associated with the case 36 continue their operation so as to keep the apparatus 3, 3' hot for the next semi-vulcanized tyre 60. The top flange 34 is also raised and the finished vulcanized tyre is thus extracted and deposited for example on an unloading rollerway (not shown).

A new semi-vulcanized tyre 60 is then inserted into the apparatus 3, 3' and the above-illustrated cycle repeated.

With this two-stage vulcanization procedure it is possible to obtain results corresponding to those obtained by means of vulcanization performed entirely inside the vulcanization mould 1, while reducing, however, the time spent by a single green tyre 50 inside the vulcanization mould 1.

Table 1 below shows the results of experimental tests carried out by the Applicant on a plurality of tyres of different sizes and with different characteristics; moreover different portions of the tyre were tested and measured. Table 1, in the left-hand column, shows the results of 8 tests divided up as follows:
Test 1: refers to a portion of an annular anchoring structure of a tyre of type 1;
Test 2: refers to a portion of an annular anchoring structure of a tyre of type 2;
Test 3: refers to a portion of a shoulder of a tyre of type 3;
Test 4: refers to a portion of a shoulder of a tyre of type 4;
Test 5: refers to a portion of a shoulder of a tyre of type 5;
Test 6: refers to a portion of a shoulder of a tyre of type 6;
Test 7: refers to a portion of a shoulder of a tyre of type 2;
Test 8: refers to a portion of the tread band of a tyre of type 6.

Each test was carried out vulcanizing the tyre indicated for 45 minutes solely inside the vulcanization mould 1 with circular segments heated to a temperature of 160°C and the sidewall plates heated to 154°C. Then, for each test, the degree of cross-linking of the tyre portion indicated was measured: for example in Test 1 the annular anchoring structure of the tyre of type 1 examined, at the end of the 45 minutes spent inside the mould 1, had a degree of cross-linking of 96%.

The same samples (namely same portion of the same tyre), again indicated in Test 1 to Test 8, were vulcanized using the two-stage method and the apparatus 3, 3' according to the invention, the results being shown in the right-hand column of Table 1: during a first vulcanization stage the tyre was introduced into the vulcanization mould 1 in the same temperature conditions described above for 32 minutes and was then introduced into the apparatus 3, 3' for 28 minutes. From a comparison of the right-hand column and left-hand column in Table 1 it is clear that the result of the two vulcanization operations is substantially similar as regards the degree of cross-linking of the elastomeric material.

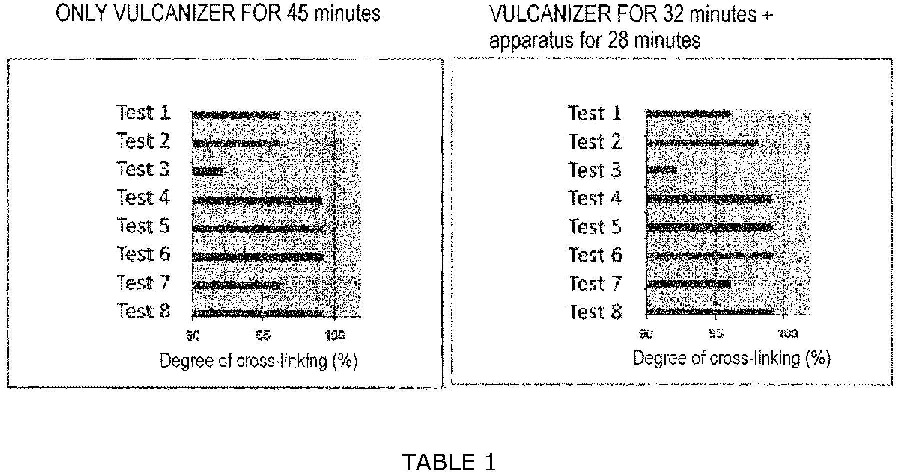

The Applicant also established the uniformity of the temperature reached by the tyre inserted inside the apparatus 3, 3' during the second vulcanization stage.

The Applicant, finally, established that the vulcanization according to the invention, which results in tyres technically similar to those which have undergone a single vulcanization process inside the vulcanization mould 1, is achieved using two separate vulcanization stages, i.e. a first stage in the vulcanizer and a second stage in the apparatus 3 or 3', however only if the semi-vulcanized tyre is brought to a correct vulcanization temperature rapidly, i.e. within the aforementioned period of time. If this does not occur, for example if the process between the first and second vulcanization stages occurs adiabatically, subsequent vulcanization is compromised and the desired optimum results are not achieved if the temperature increase should take place over too long a time period.

More precisely, the Applicant has established that, by performing the aforementioned process in a substantially adiabatic manner, as taught in the US patent 6322342, the vulcanization temperature is no longer reached and the heat supplied in the apparatus downstream of the vulcanization mould is insufficient for achieving a rapid temperature increase and therefore restoring vulcanization correctly. The tyre obtained does not have the same desired performance features, namely it is not possible to obtain the same technical performance features as those of a tyre vulcanized in a single vulcanization stage inside a vulcanization mould or in the two-stage vulcanization process according to the invention. Ensuring that at least one portion of the tyre reaches as rapidly as possible a temperature close to that which it had in the mould is therefore indispensable for obtaining the desired technical performance characteristics and at the same time for limiting the amount of time spent by a single tyre inside the vulcanization mould.

## Claims

1. A method of vulcanizing a green tyre (50) having a toroidal structure defining a radially inner surface (50b) and a radially outer surface (50a) and a first annular anchoring structure (51a) and a second annular anchoring structure (51b) arranged axially opposite one another, the method comprising:
• introducing said green tyre (50) into a vulcanization mould (1);
• partially vulcanizing said green tyre so as to produce a semi-vulcanized tyre (60);
• removing said semi-vulcanized tyre (60) from said vulcanization mould (1);
• completing the vulcanization of said semi-vulcanized tyre (60) outside said vulcanization mould, wherein the vulcanization completion action comprises:
• heating said semi-vulcanized tyre so as to bring at least one portion of said semi-vulcanized tyre (60) to a temperature having a value of between 75% and 120% of the temperature of said at least one portion of semi-vulcanized tyre (60) at the moment of its removal from the vulcanization mould (1), within a period of time of between 2 minutes and 7 minutes from the time at which said semi-vulcanized tyre (60) was removed from said mould (1),
and wherein after the action of removing said semi-vulcanized tyre (60) from said vulcanization mould (1), the method comprises:
• introducing said semi-vulcanized tyre into a chamber (37) defining a closed free space in which said semi-vulcanized tyre (60) is housed; and
• admitting a first heated fluid to said chamber (37) so as to supply heat to said semi-vulcanized tyre (60).

2. A method according to claim 1, wherein, during the action of completing the vulcanization of said semi-vulcanized tyre (60), the temperature of said at least one portion of said semi-vulcanized tyre reaches a value of between 130°C and 180°C.

3. A method according to one or more of the preceding claims including, prior to the action of admitting said first fluid:
- locking said semi-vulcanized tyre (60) in said chamber (37), in the region of said opposed first and second annular anchoring structures (51a, 51b), so as to define two separate spaces: an inner space (Vᵢ) partially delimited by said radially inner surface (50b) of said semi-vulcanized tyre (60), and an outer space (Vₑ) partially delimited by said radially outer surface (50a) of said semi-vulcanized tyre (60) and by a wall (36a) of said chamber (37).

4. A method according to Claim 3 including:
• admitting said first fluid to said outer space (Vₑ) so that the temperature inside said outer space in the region of a portion of said radially outer surface (50a) of said semi-vulcanized tyre (60) reaches a value at least 10°C higher than the temperature value of said portion of said radially outer surface (50a) of said semi-vulcanized tyre (60) upon its removal from the vulcanization mould (1).

5. A method according to one or more of the preceding Claims, including:
• supplying to said first annular anchoring structure (51a) a quantity of heat per unit of time greater than the quantity of heat per unit of time that is supplied to the opposed, second annular anchoring structure (51b) of said semi-vulcanized tyre (60).

6. A method according to one or more of the preceding Claims, wherein the action of removing said semi-vulcanized tyre from said vulcanization mould (1) and introducing said semi-vulcanized tyre (60) into said chamber (37) is performed within a period of time of between 30 seconds and 3 minutes.

7. A method according to one or more of the preceding Claims, including:
• heating at least one portion of a peripheral wall (36a) of said chamber (37) so as to bring it to a temperature above the ambient temperature.

8. An apparatus (3, 3') for completing the vulcanization of a semi-vulcanized tyre (60) that has been removed from a vulcanization mould (1), said apparatus comprising:
• a chamber (37) suitable for housing said semi-vulcanized tyre (60), said chamber comprising a base (32) and a case (36) which is movable axially from a first operative position in which it is spaced from said base (32) so as to permit the introduction of said semi-vulcanized tyre (60) to a second operative position in which it bears with hermetic sealing on said base (32), said chamber defining a space (Vₑ) into which a first fluid is supplied in contact with a radially outer surface (50a) of said semi-vulcanized tyre (60);
• a distributor (75) for distributing said first fluid in said chamber (37);
• a heater element (70) suitable for bringing said first fluid to a temperature such that, within a period of time of between 2 minutes and 7 minutes after the removal of the semi-vulcanized tyre (60) from the vulcanization mould (1), the temperature of at least one portion of said semi-vulcanized tyre (60) reaches a value of between 75% and 120% of the temperature of said at least one portion of the semi-vulcanized tyre at the moment of its removal from the vulcanization mould;
wherein said case (36) comprises a peripheral wall (36a) and a further heater element for heating said peripheral wall (36a).

9. An apparatus (3, 3') according to Claim 8 wherein said chamber (37) comprises:
• a first flange (33) which is integral with said base (32) and is abutted by a first annular anchoring structure (51a) of said semi-vulcanized tyre (60);
• a second, axially movable flange (34) which is adapted to abut a second annular anchoring structure (51b) axially opposite the first one of said semi-vulcanized tyre in said second operative position.

10. An apparatus (3') according to one or more of Claims 8 or 9 including a second heater element (80) which is disposed in the region of said first flange (33) for the heating thereof.

11. An apparatus (3, 3') according to one or more of Claims 8 to 10 wherein said case includes a cavity (361) including a tube bundle through which a fluid heated by said further heater element flows.

12. An apparatus (3, 3') according to one or more of Claims 9 to 11 including a first actuator (39) for the axial movement of said second flange (34) and a second actuator (38) for the axial movement of said case (36), said first actuator and second actuator moving said flange and said case, respectively, independently of one another.

13. A vulcanization plant (100), including:
• a vulcanization mould (1) for partially vulcanizing a green tyre (50) so as to produce a semi-vulcanized tyre (60);
• at least one device (2) for removing said semi-vulcanized tyre (60) from said vulcanization mould (1) and moving it to an apparatus for completing the vulcanization;
• an apparatus (3, 3') for completing the vulcanization of the semi-vulcanized tyre (60),
wherein said apparatus comprises:
• a chamber (37) suitable for housing said semi-vulcanized tyre (60), said chamber defining a space (Vₑ) into which a first fluid is supplied in contact with a radially outer surface (50a) of said semi-vulcanized tyre (60);
• a distributor (75) for distributing said first fluid in said chamber (37); and
• a heater element (70) suitable for bringing said first fluid to a temperature such that, within a period of time of between 2 minutes and 7 minutes after the removal of the semi-vulcanized tyre (60) from the vulcanization mould (1), the temperature of at least one portion of said semi-vulcanized tyre (60) reaches a value of between 75% and 120% of the temperature of said at least one portion of the semi-vulcanized tyre at the moment of its removal from the vulcanization mould.

14. A vulcanization plant (100) according to Claim 13 wherein said device (2) is adapted to remove said semi-vulcanized tyre (60) from said vulcanization mould (1) and move it to said apparatus (3, 3') within a period of time of between 30 seconds and 3 minutes.

15. A vulcanization plant (100) according to Claim 13 or Claim 14 including two apparatuses (3, 3') for each vulcanization mould (1).

## Patentansprüche

1. Verfahren zum Vulkanisieren eines Rohreifens (50) mit einer ringförmigen Struktur, die eine radial innere Oberfläche (50b) und eine radial äußere Oberfläche (50a) definiert, sowie eine erste ringförmige Verankerungsstruktur (51a) und eine zweite ringförmige Verankerungsstruktur (51b), die einander axial gegenüberliegend angeordnet sind, wobei das Verfahren umfasst:
- Einsetzen des Rohreifens (50) in eine Vulkanisierform (1) ;
- teilweises Vulkanisieren des Rohreifens, um einen halbvulkanisierten Reifen (60) herzustellen;
Entfernen des halbvulkanisierten Reifens (60) aus der Vulkanisierform (1);
Abschließen der Vulkanisierung des halbvulkanisierten Reifens (60) außerhalb der Vulkanisierform, wobei die Aktion zum Abschluss der Vulkanisierung umfasst:
Aufheizen des halbvulkanisierten Reifens, um zumindest einen Abschnitt des halbvulkanisierten Reifens (60) auf eine Temperatur mit einem Wert zwischen 75 % und 120 % der Temperatur des zumindest einen Abschnitts des halbvulkanisierten Reifens (60) zum Zeitpunkt seiner Entfernung aus der Vulkanisierform (1) zu bringen, innerhalb einer Zeitperiode von zwischen 2 Minuten und 7 Minuten ab dem Zeitpunkt, zu dem der halbvulkanisierte Reifen (60) aus der Form (1) entfernt wurde,
und wobei nach der Aktion des Entfernens des halbvulkanisierten Reifens (60) aus der Vulkanisierform (1) das Verfahren folgende Schritte umfasst:
- Einsetzen des halbvulkanisierten Reifens in eine Kammer (37), die einen umschlossenen freien Raum definiert, in dem der halbvulkanisierten Reifen (60) eingehaust ist; und
- Einlassen eines ersten aufgeheizten Fluids in die Kammer (37), um Wärme an den halbvulkanisierten Reifen (60) zu liefern.

2. Verfahren nach Anspruch 1, wobei während der Aktion des Abschließens der Vulkanisierung des halbvulkanisierten Reifens (60) die Temperatur des zumindest einen Abschnitts des halbvulkanisierten Reifens einen Wert zwischen 130 °C und 180 °C erreicht.

3. Verfahren nach einem oder mehreren der vorhergehenden Ansprüche, das vor der Aktion des Einlassens des ersten Fluids Folgendes umfasst:
- Verriegeln des halbvulkanisierten Reifens (60) in der Kammer (37), in dem Bereich der gegenüberliegenden ersten und zweiten ringförmigen Verankerungsstrukturen (51a, 51b), um zwei separate Räume zu definieren: einen inneren Raum (Vi), der teilweise durch die radial innere Oberfläche (50b) des halbvulkanisierten Reifens (60) definiert wird, und einen äußeren Raum (Ve), der teilweise durch die radial äußere Oberfläche (50a) des halbvulkanisierten Reifens (60) und durch eine Wand (36a) der Kammer (37) definiert wird.

4. Verfahren nach Anspruch 3, umfassend:
- Einlassen des ersten Fluids in den äußeren Raum (Va), so dass die Temperatur innerhalb des äußeren Raums in dem Bereich eines Abschnitts der radial äußeren Oberfläche (50a) des halbvulkanisierten Reifens (60) einen Wert erreicht, der zumindest 10 °C höher ist als der Temperaturwert des Abschnitts der radial äußeren Oberfläche (50a) des halbvulkanisierten Reifens (60) bei seiner Entfernung aus der Vulkanisierform (1).

5. Verfahren nach einem oder mehreren der vorhergehenden Ansprüche, umfassend:
Zuführen, an die erste ringförmige Verankerungsstruktur (51a), einer Menge an Wärme pro Zeiteinheit, die größer ist als eine Menge an Wärme pro Zeiteinheit, die an die gegenüberliegende, zweite ringförmige Verankerungsstruktur (51b) des halbvulkanisierten Reifens (60) zugeführt wird.

6. Verfahren nach einem oder mehreren der vorhergehenden Ansprüche, wobei die Aktion des Entfernens des halbvulkanisierten Reifens aus der Vulkanisierform (1) und des Einsetzens des halbvulkanisierten Reifens (60) in die Kammer (37) innerhalb einer Zeitperiode von zwischen 30 Sekunden und 3 Minuten erfolgt.

7. Verfahren nach einem oder mehreren der vorhergehenden Ansprüche, umfassend:
Aufheizen des zumindest einen Abschnitts einer Umfangswand (36a) der Kammer (37), um ihn auf eine Temperatur über der Umgebungstemperatur zu bringen.

8. Vorrichtung (3, 3') zum Abschließen der Vulkanisierung eines halbvulkanisierten Reifens (60), der aus einer Vulkanisierform (1) entfernt wurde, wobei die Vorrichtung Folgendes umfasst:
eine Kammer (37), die dazu geeignet ist, den halbvulkanisierten Reifen (60) einzuhausen, wobei die Kammer eine Basis (32) und ein Gehäuse (36) umfasst, das axial aus einer ersten Betriebsstellung, in der es von der Basis (32) beabstandet ist, um das Einsetzen des halbvulkanisierten Reifens (60) zu erlauben, in eine zweite Betriebsstellung beweglich ist, in der es unter hermetischer Abdichtung gegen die Basis (32) anliegt, wobei die Kammer einen Raum (Va) definiert, in welchen ein erstes Fluid in Kontakt mit einer radial äußeren Oberfläche (50a) des halbvulkanisierten Reifens (60) zugeführt wird;
- einen Verteiler (75) zum Verteilen des ersten Fluids in der Kammer (37);
- ein Heizelement (70), das geeignet ist, um das erste Fluid auf eine Temperatur zu bringen, so dass, innerhalb einer Zeitperiode von zwischen 2 Minuten und 7 Minuten nach der Entfernung des halbvulkanisierten Reifens (60) aus der Vulkanisierform (1), die Temperatur zumindest eines Abschnitts des halbvulkanisierten Reifens (60) einen Wert von zwischen 75 % und 120 % der Temperatur des zumindest einen Abschnitts des halbvulkanisierten Reifens zum Zeitpunkt seiner Entfernung aus der Vulkanisierform erreicht;
wobei das Gehäuse (36) eine Umfangswand (36a) und ein weiteres Heizelement zur Erwärmung der Umfangswand (36a) umfasst.

9. Vorrichtung (3, 3') nach Anspruch 8, wobei die Kammer (37) umfasst:
- einen ersten Flansch (33), der mit der Basis (32) einteilig ist und gegen eine erste ringförmige Verankerungsstruktur (51a) des halbvulkanisierten Reifens (60) anliegt;
- einen zweiten, axial beweglichen Flansch (34), der dazu geeignet ist, gegen eine zweite ringförmige Verankerungsstruktur (51b) anzuliegen, die der ersten des halbvulkanisierten Reifens in der zweiten Betriebsstellung gegenüberliegt.

10. Vorrichtung (3') nach einem oder mehreren der Ansprüche 8 oder 9, umfassend ein zweites Heizelement (80), das in dem Bereich des ersten Flansches (33) zur Beheizung desselben angeordnet ist.

11. Vorrichtung (3, 3') nach einem oder mehreren der Ansprüche 8 bis 10, wobei das Gehäuse einen Hohlraum (361) umfasst, der ein Rohrbündel umfasst, durch welches ein Fluid strömt, das durch das weitere Heizelement erwärmt wird.

12. Vorrichtung (3, 3') nach einem oder mehreren der Ansprüche 9 bis 11, umfassend ein erstes Stellglied (39) für die axiale Bewegung des zweiten Flanschs (34) und ein zweites Stellglied (38) für die axiale Bewegung des Gehäuses (36), wobei das erste fi Stellglied und das zweite Stellglied den Flansch und das Gehäuse jeweils unabhängig voneinander bewegen.

13. Vulkanisieranlage (100), die Folgendes umfasst:
eine Vulkanisierform (1) zum teilweisen Vulkanisieren eines Rohreifens (50), um einen halbvulkanisierten Reifen (60) herzustellen; zumindest eine Einrichtung (2) zum Entfernen des halbvulkanisierten Reifens (60) aus der Vulkanisierform (1) und Bewegen zu einer Vorrichtung zum Abschließen der Vulkanisierung;
eine Vorrichtung (3, 3') zum Abschließen der Vulkanisierung des halbvulkanisierten Reifens (60),
wobei die Vorrichtung umfasst:
eine Kammer (37), die dazu geeignet ist, den halbvulkanisierten Reifen (60) einzuhausen, wobei die Kammer einen Raum (Vs) definiert, in welchen ein erstes Fluid in Kontakt mit einer radial äußeren Oberfläche (50a) des halbvulkanisierten Reifens (60) zugeführt wird;
einen Verteiler (75) zum Verteilen des ersten Fluids in der Kammer (37); und
ein Heizelement (70), das geeignet ist, um das erste Fluid auf eine Temperatur zu bringen, so dass, innerhalb einer Zeitperiode von zwischen 2 Minuten und 7 Minuten nach der Entfernung des halbvulkanisierten Reifens (60) aus der Vulkanisierform (1), die Temperatur zumindest eines Abschnitts des halbvulkanisierten Reifens (60) einen Wert von zwischen 75 % und 120 % der Temperatur des zumindest einen Abschnitts des halbvulkanisierten Reifens zum Zeitpunkt seiner Entfernung aus der Vulkanisierform erreicht.

14. Vulkanisieranlage (100) nach Anspruch 13, wobei die Einrichtung (2) dazu geeignet ist, den halbvulkanisierten Reifen (60) innerhalb einer Zeitperiode von zwischen 30 Sekunden und 3 Minuten aus der Vulkanisierform (1) zu entfernen und ihn zu der Vorrichtung (3, 3') zu bewegen.

15. Vulkanisieranlage (100) nach Anspruch 13 oder Anspruch 14, umfassend zwei Einrichtungen (3, 3') für jede Vulkanisierform (1).

## Revendications

1. Procédé de vulcanisation d'un pneu cru (50) ayant une structure toroïdale définissant une surface radialement interne (50b) et une surface radialement externe (50a) et une première structure d'ancrage annulaire (51a) et une deuxième structure d'ancrage annulaire (51b) agencées de manière à être axialement opposées l'une à l'autre, le procédé comprenant le fait :
• d'introduire ledit pneu cru (50) dans un moule de vulcanisation (1) ;
• de vulcaniser partiellement ledit pneu cru de manière à produire un pneu semi-vulcanisé (60) ;
• de retirer ledit pneu semi-vulcanisé (60) dudit moule de vulcanisation (1) ;
• d'achever la vulcanisation dudit pneu semi-vulcanisé (60) à l'extérieur dudit moule de vulcanisation, où l'action d'achèvement de la vulcanisation comprend le fait :
• de chauffer ledit pneu semi-vulcanisé de manière à porter au moins une partie dudit pneu semi-vulcanisé (60) à une température ayant une valeur comprise entre 75% et 120% de la température de ladite au moins une partie de pneu semi-vulcanisé (60) au moment de son retrait du moule de vulcanisation (1), dans un délai compris entre 2 minutes et 7 minutes à partir du moment auquel ledit pneu semi-vulcanisé (60) a été retiré dudit moule (1),
et où, après l'action de retrait dudit pneu semi-vulcanisé (60) dudit moule de vulcanisation (1), le procédé comprend le fait :
• d'introduire ledit pneu semi-vulcanisé dans une chambre (37) définissant un espace libre fermé dans lequel ledit pneu semi-vulcanisé (60) est reçu ; et
• de laisser entrer un premier fluide chauffé dans ladite chambre (37) de manière à fournir de la chaleur audit pneu semi-vulcanisé (60).

2. Procédé selon la revendication 1, dans lequel, durant l'action d'achèvement de la vulcanisation dudit pneu semi-vulcanisé (60), la température de ladite au moins une partie dudit pneu semi-vulcanisé atteint une valeur comprise entre 130°C et 180°C.

3. Procédé selon une ou plusieurs des revendications précédentes, comportant, avant l'action consistant à laisser entrer ledit premier fluide, le fait :
- de bloquer ledit pneu semi-vulcanisé (60) dans ladite chambre (37), dans la région desdites première et deuxième structures d'ancrage annulaires opposées (51a, 51b), de manière à définir deux espaces séparés : un espace interne (Vᵢ) partiellement délimité par ladite surface radialement interne (50b) dudit pneu semi-vulcanisé (60) et un espace externe (Vₑ) partiellement délimité par ladite surface radialement externe (50a) dudit pneu semi-vulcanisé (60) et par une paroi (36a) de ladite chambre (37).

4. Procédé selon la revendication 3, comportant le fait :
• de laisser entrer ledit premier fluide dans ledit espace externe (Vₑ) de sorte que la température à l'intérieur dudit espace externe dans la région d'une partie de ladite surface radialement externe (50a) dudit pneu semi-vulcanisé (60) atteigne une valeur supérieure d'au moins 10°C à la valeur de température de ladite partie de ladite surface radialement externe (50a) dudit pneu semi-vulcanisé (60) lors de son retrait du moule de vulcanisation (1).

5. Procédé selon une ou plusieurs des revendications précédentes, comportant le fait :
• de fournir à ladite première structure d'ancrage annulaire (51a) une quantité de chaleur par unité de temps supérieure à la quantité de chaleur par unité de temps qui est fournie à la deuxième structure d'ancrage annulaire opposée (51b) dudit pneu semi-vulcanisé (60).

6. Procédé selon une ou plusieurs des revendications précédentes, dans lequel l'action de retrait dudit pneu semi-vulcanisé dudit moule de vulcanisation (1) et d'introduction dudit pneu semi-vulcanisé (60) dans ladite chambre (37) est réalisée dans un délai compris entre 30 secondes et 3 minutes.

7. Procédé selon une ou plusieurs des revendications précédentes, comportant le fait :
• de chauffer au moins une partie d'une paroi périphérique (36a) de ladite chambre (37) de manière à la porter à une température supérieure à la température ambiante.

8. Appareil (3, 3') pour achever la vulcanisation d'un pneu semi-vulcanisé (60) qui a été retiré d'un moule de vulcanisation (1), ledit appareil comprenant :
• une chambre (37) appropriée pour recevoir ledit pneu semi-vulcanisé (60), ladite chambre comprenant une base (32) et un boîtier (36) qui peut se déplacer axialement d'une première position de fonctionnement dans laquelle il est espacé de ladite base (32) de manière à permettre l'introduction dudit pneu semi-vulcanisé (60) à une deuxième position de fonctionnement dans laquelle il s'appuie, avec une étanchéité hermétique, sur ladite base (32), ladite chambre définissant un espace (Vₑ) dans lequel un premier fluide est fourni en contact avec une surface radialement externe (50a) dudit pneu semi-vulcanisé (60) ;
• un distributeur (75) pour distribuer ledit premier fluide dans ladite chambre (37) ;
• un élément chauffant (70) approprié pour porter ledit premier fluide à une température de sorte que, dans un délai compris entre 2 minutes et 7 minutes après retrait du pneu semi-vulcanisé (60) du moule de vulcanisation (1), la température d'au moins une partie dudit pneu semi-vulcanisé (60) atteigne une valeur comprise entre 75% et 120% de la température de ladite au moins une partie du pneu semi-vulcanisé au moment de son retrait du moule de vulcanisation ;
où ledit boîtier (36) comprend une paroi périphérique (36a) et un élément chauffant supplémentaire pour chauffer ladite paroi périphérique (36a).

9. Appareil (3, 3') selon la revendication 8, dans lequel ladite chambre (37) comprend :
• une première bride (33) qui est solidaire de ladite base (32) et vient en butée contre une première structure d'ancrage annulaire (51a) dudit pneu semi-vulcanisé (60) ;
• une deuxième bride (34) pouvant se déplacer axialement qui est adaptée pour venir en butée contre une deuxième structure d'ancrage annulaire (51b) axialement opposée à la première structure d'ancrage annulaire dudit pneu semi-vulcanisé dans ladite deuxième position de fonctionnement.

10. Appareil (3') selon une ou plusieurs des revendications 8 et 9, comportant un deuxième élément chauffant (80) qui est disposé dans la région de ladite première bride (33) pour la chauffer.

11. Appareil (3, 3') selon une ou plusieurs des revendications 8 à 10, dans lequel ledit boîtier comporte une cavité (361) comportant un faisceau de tubes à travers lesquel s'écoule un fluide chauffé par ledit élément chauffant supplémentaire.

12. Appareil (3, 3') selon une ou plusieurs des revendications 9 à 11, comportant un premier actionneur (39) pour le déplacement axial de ladite deuxième bride (34) et un deuxième actionneur (38) pour le déplacement axial dudit boîtier (36), ledit premier actionneur et ledit deuxième actionneur déplacent respectivement ladite bride et ledit boîtier, indépendamment l'un(e) de l'autre.

13. Installation de vulcanisation (100), comportant :
• un moule de vulcanisation (1) pour vulcaniser partiellement un pneu cru (50) de manière à produire un pneu semi-vulcanisé (60) ;
• au moins un dispositif (2) pour retirer ledit pneu semi-vulcanisé (60) dudit moule de vulcanisation (1) et le déplacer vers un appareil pour achever la vulcanisation ;
• un appareil (3, 3') pour achever la vulcanisation du pneu semi-vulcanisé (60),
dans lequel ledit appareil comprend :
• une chambre (37) appropriée pour recevoir ledit pneu semi-vulcanisé (60), ladite chambre définissant un espace (Vₑ) dans lequel un premier fluide est fourni en contact avec une surface radialement externe (50a) dudit pneu semi-vulcanisé (60) ;
• un distributeur (75) pour distribuer ledit premier fluide dans ladite chambre (37) ; et
• un élément chauffant (70) approprié pour porter ledit premier fluide à une température de sorte que, dans un délai compris entre 2 minutes et 7 minutes après retrait du pneu semi-vulcanisé (60) du moule de vulcanisation (1), la température d'au moins une partie dudit pneu semi-vulcanisé (60) atteigne une valeur comprise entre 75% et 120% de la température de ladite au moins une partie du pneu semi-vulcanisé au moment de son retrait du moule de vulcanisation.

14. Installation de vulcanisation (100) selon la revendication 13, dans laquelle ledit dispositif (2) est adapté pour retirer ledit pneu semi-vulcanisé (60) dudit moule de vulcanisation (1) et le déplacer vers ledit appareil (3, 3') dans un délai compris entre 30 secondes et 3 minutes.

15. Installation de vulcanisation (100) selon la revendication 13 ou 14, comportant deux appareils (3, 3') pour chaque moule de vulcanisation (1).
